# FASCICULE DE BREVET EUROPEEN

(11) **EP 3 237 720 B1**
(45) Date de publication et mention de la délivrance du brevet: **08.09.2021**
(21) Numéro de dépôt: 15823358.5
(22) Date de dépôt: 18.12.2015
(51) Int. Cl.: E21B 17/00, B65D 59/00, F16L 57/00

(54) **PROTECTEUR D'EXTREMITE MALE OU FEMELLE D'UN COMPOSANT DE JOINT FILETE TUBULAIRE A JOINT SOUPLE**
BIEGSAMER GEWINDEGESTÄNGE ZAPFEN- UND MUFFENENDSCHUTZ
FLEXIBLE THREADED TUBULAR MALE OR FEMALE EXTREMITY PROTECTOR

(30) Priorité: 23.12.2014 FR 1463225
(43) Date de publication de la demande: 01.11.2017
(73) Titulaire: Vallourec Oil and Gas France, 59620 Aulnoye-Aymeries (FR)
(72) Inventeur: AGUILAR MENDEZ, José Antonio, 94240 Veracruz (MX); MAGALLANES MONTALVO, Gerardo Manuel, 91779 Veracruz (MX); BOUSBAINE, Karim, 25490 Badevel (FR)
(74) Mandataire: Cabinet Netter
(86) Numéro de dépôt international: PCT/FR2015/053632
(87) Numéro de publication internationale: WO 2016/102847

(56) Documents cités:
- DE-A1- 3 530 347
- US-A- 4 210 179
- US-A- 4 337 799
- US-A- 4 487 228
- US-E- R E18 184

## Description

L'invention concerne les composants filetés tubulaires et plus précisément les protecteurs de l'extrémité de certains de ces composants, notamment les tubes de forage ou d'exploitation de puits de pétrole ou gaz.

On entend ici par "composant" tout élément ou accessoire utilisé pour forer ou exploiter un puits et comprenant au moins une connexion ou connecteur ou encore extrémité filetée, et destiné à être assemblé par un filetage à un autre composant pour constituer avec cet autre composant un joint fileté tubulaire. Le composant peut être par exemple un élément tubulaire de relativement grande longueur (notamment d'environ une dizaine de mètres de longueur), par exemple un tube, ou bien un manchon tubulaire de quelques dizaines de centimètres de longueur, ou encore un accessoire de ces éléments tubulaires (dispositif de suspension ou « hanger », pièce de changement de section ou « cross-over », vanne de sécurité, connecteur pour tige de forage ou « tool joint », « sub », et analogues).

Les composants sont généralement assemblés les uns aux autres pour être descendus dans les puits d'hydrocarbures ou des puits similaires et constituer une garniture de forage, une colonne de tubes de cuvelage (« casing ») ou de tubage (« liners ») ou encore une colonne de tubes de production (« tubing ») (colonnes d'exploitation).

La spécification API 5CT émise par l'American Petroleum Institute (API), équivalente à la norme ISO 11960 : 2004 émise par l'International Standardisation Organisation (ISO), régit les tubes utilisés comme casing ou tubing, et la spécification API 5B définit des filetages standards pour ces tubes.

La spécification 7 de l'API définit des connexions filetées à épaulement pour tiges de forage rotatif.

Les fabricants de composants de joints filetés tubulaires ont également développé des joints filetés dits supérieurs (« premium ») qui présentent des géométries spécifiques des filetages, et des moyens spécifiques leur procurant de meilleures performances en service, notamment en matière de résistance mécanique et d'étanchéité.

Les connexions filetées comprennent le plus souvent un ou deux filetages dont les filets sont sensiblement trapézoïdaux et comprennent un flanc d'engagement du côté des filets dirigés vers l'extrémité libre de l'élément fileté considéré, un flanc porteur du côté opposé des filets d'engagement, un sommet de filet de largeur non nulle et un fond de filet de largeur également non nulle, les flancs porteurs et les flancs d'engagement étant d'orientation sensiblement perpendiculaire à l'axe de l'élément fileté (Par exemple, le filet API Buttress présente selon la norme API une inclinaison de +3° pour les flancs porteurs, et une inclinaison de +10° pour les flancs d'engagement).

Il existe également des filets triangulaires ou ronds présentant également des flancs d'engagement et des flancs porteurs dont les sommets et fonds de filets sont de largeur sensiblement nulle, mais qui sont aujourd'hui très peu utilisés car ils présentent un fort risque de désengrènement (« jump-out »).

Les composants précités peuvent comporter une extrémité mâle filetée qui est destinée à être vissée à une extrémité femelle filetée d'un autre composant de forage ou d'exploitation. Il est donc indispensable que leurs extrémités mâle et femelle soient le moins possible endommagées, polluées et détériorées entre le moment où ils sortent de leur chaîne de fabrication et celui où ils sont utilisés, mais également entre deux utilisations successives. On comprendra qu'il est en effet nécessaire de protéger contre la corrosion, les poussières et les chocs (ou coups) non seulement le filetage, mais également les éventuelles portée(s) et butée(s) qui ont chacun des fonctions spécifiques et complémentaires, notamment en vue d'assurer une étanchéité en phase d'utilisation.

Par ailleurs, les extrémités des composants précités étaient généralement enduites juste avant leur assemblage d'une graisse à propriété anti-grippante.

Il est de plus en plus courant de remplacer cette graisse par une combinaison de traitements de surface et de revêtements apposés en fines couches sur les connexions, c'est-à-dire sur le filetage, sur la portée, sur la butée.

Par exemple, il a été proposé, notamment dans US 6,027,145, EP 1211451 et FR 2892174, de remplacer la graisse appliquée au pinceau en final sur l'extrémité du composant, par une fine couche, d'épaisseur prédéterminée appliquée en usine, d'un lubrifiant sec à base de particules de lubrifiants solides.

Ces traitements de surface et revêtements présentent des propriétés de dureté, de lubrification, d'anticorrosion adaptées à la situation de vie de l'assemblage de deux connexions ou à l'état assemblé, et il est nécessaire d'adapter les protecteurs de la connexion hors ces étapes de vie du produit, notamment pendant le stockage, la manutention et le transport, pour préserver la connexion tant d'un enlèvement mécanique que d'une pollution (sable, débris) préjudiciables à l'efficacité du produit.

Les revêtements sont aussi appelés revêtements lubrifiants, et qualifiés de solides ou semi-solides, secs ou semi-secs. Ils présentent des propriétés de viscosité qui s'étendent sur une très large plage, de 500 mPa.s à 25°C à plus de 5000 mPa.s à 25°C, certains sont même qualifiés de « collants », c'est-à-dire qu'après application sur les surfaces de la connexion, ils peuvent adhérer à un objet qui le touche, notamment peuvent migrer sur les doigts d'un opérateur qui effleure la surface revêtue de la connexion. D'autres au contraires sont qualifiés de rigides et présentent une certaine dureté. Ce sont des propriétés recherchées pour faciliter l'assemblage de deux connexions, mais qui posent problème avec les protecteurs de connexions. En effet, ceux-ci devant préserver les connexions des chocs, ils doivent être solidement arrimés à la connexion, et doivent présenter des corps rigides.

Pour obtenir ce(s) protection(s), on place généralement, ainsi que l'exige la spécification API 5CT (au paragraphe 12.2), un protecteur sur les extrémités mâle et femelle des composants de joints filetés tubulaires. De nombreux dispositifs de ce type ont été proposés, notamment dans EP 0148807, US 2006/0042709, WO 2005/075877 et WO 2005/024282, les trois derniers documents visant plus particulièrement les protecteurs pour joints préalablement enduits de lubrifiant en usine. Il a été mis en évidence que certains présentent des risques d'endommagement du dispositif de protection à la mise en place, et une étanchéité à l'air et à l'humidité insuffisante.

Les protecteurs sont des dispositifs dont la fonction principale est de protéger les surfaces fonctionnelles des connexions mâles ou femelles vis-à-vis des chocs mécaniques. Ces surfaces peuvent être un ou plusieurs filetage(s), une ou plusieurs portée(s), une ou plusieurs butée(s). Un protecteur est de forme générale sensiblement cylindrique et comprend généralement un amortisseur de chocs mécaniques appelé pare-choc situé à l'extrémité opposée à l'extrémité libre du protecteur, un corps, un moyen d'arrimage, cf US 4 487 228 ou US 4 337 799 ou US RE 18 184. La solution généralement adaptée pour arrimer un protecteur sur une connexion est de le visser sur le filetage de la connexion. Cette solution permet un geste de montage simple associé à un positionnement précis. Le protecteur comporte donc un filetage apte à être vissé sur le filetage de la connexion. Le filetage est le plus souvent de même type et de même pas que celui de la connexion.

Aussi, avec l'apparition des traitements de surface et des revêtements apposés sur les connexions, les protecteurs ont été munis de moyens d'étanchéité pour renforcer l'étanchéité à l'humidité ou à l'air des espaces comprenant les surfaces fonctionnelles d'une connexion. Ces moyens d'étanchéité sont généralement rapportés sur le protecteur, et sont réalisés dans des formes et matériaux leur conférant une souplesse accrue par rapport au corps très rigide du protecteur, afin qu'une partie de leur surface fasse contact avec une surface de la connexion en regard en vue de réaliser un contact étanche.

Cependant, la demanderesse s'est aperçue que les solutions connues ne permettent pas d'établir une étanchéité à l'eau satisfaisante.

En effet, les solutions de l'état de l'art ne proposent pas de protecteur dont un joint d'étanchéité est maintenu de manière suffisamment efficace en position pour assurer une étanchéité satisfaisante.

Par ailleurs, des joints d'étanchéité du protecteur sont en contact avec des surfaces d'une connexion présentant différents états de surface. Il a été constaté que le coefficient de frottement entre une surface d'un joint de protecteur et une surface d'une connexion peut varier de 0,3 à 1,7. Il peut donc y avoir un frottement important entre le joint et la connexion. Un autre aspect de l'invention est de proposer un joint latéral ayant un meilleur maintien lors de la mise en place du protecteur sur la connexion et proposant une indication de défaut de maintien du joint dans son logement à l'opérateur.

L'invention a pour but d'améliorer la situation, notamment en termes de simplicité de mise en œuvre et de robustesse, tout en obtenant une étanchéité de qualité et la possibilité d'inspection.

L'invention est un protecteur d'extrémité mâle ou femelle de composant de joint fileté tubulaire pour le forage ou l'exploitation de puits d'hydrocarbures, comprenant un corps principal, un premier joint d'étanchéité en matière moins rigide que la matière du corps du protecteur et destiné à faire étanchéité avec une surface d'une extrémité du composant, le corps principal comprenant une pluralité d'orifices à travers lesquels pénètre le joint d'étanchéité.

Dans un mode de réalisation, les orifices sont répartis sur une périphérie du corps principal.

Dans un mode de réalisation, le moyen d'étanchéité comprend une couronne, une lèvre d'étanchéité, une extension de maintien.

Dans un mode de réalisation, une extension de maintien comprend une tête de verrouillage.

Dans un mode de réalisation, une extension de maintien comprend une prise de tête.

Dans un mode de réalisation, le corps principal comprend une pluralité d'alésages dans lesquelles débouche une pluralité d'orifices.

Dans un mode de réalisation, le corps principal comprend une gorge circonférentielle dans laquelle débouche une pluralité d'orifices.

Dans un mode de réalisation, le moyen d'étanchéité est surmoulé sur le corps du protecteur et pénètre au moins un orifice.

Dans un mode de réalisation, le joint d'étanchéité est en élastomère.

Dans un mode de réalisation, le joint d'étanchéité est destiné à faire étanchéité avec une surface latérale de la surface d'extrémité du composant.

L'invention a aussi pour objet un procédé de montage d'un protecteur comprenant les étapes de :
- Disposer un premier joint d'étanchéité sur le corps de protecteur
- Enfoncer une extension de maintien au travers d'un orifice
- Couper la prise de tête

Dans un mode de réalisation, le procédé comprend également l'étape de :
- Tirer sur une prise de tête d'une extension de maintien jusqu'à ce que la tête de verrouillage traverse totalement l'orifice

On entend par « connexion mâle » la portion d'un composant munie de surfaces usinées et/ou rectifiées en vue de former un joint avec une portion femelle correspondante et par « corps » la portion d'un composant située au-delà et munie de surfaces venues de laminage. Une connexion mâle a généralement un ou plusieurs filetage(s) situé sur une paroi latérale extérieure et une connexion femelle correspondante a un ou plusieurs filetage(s) correspondants sur une paroi latérale intérieure de composant.

D'autres caractéristiques et avantages de l'invention apparaîtront à l'examen de la description détaillée ci-après, et des dessins annexés, sur lesquels :
- la figure 1 illustre de façon schématique, une vue en coupe d'une extrémité mâle de composant tubulaire
- la figure 2 illustre de façon schématique, dans une vue en coupe longitudinale, d'un protecteur pour connexion mâle selon un mode de réalisation non revendiqué
- les figures 3a et 3b illustrent de façon schématique, en vue de face, des joints annulaires de protecteurs pour extrémité mâle et femelle selon un mode de réalisation de l'invention
- la figure 4 illustre de façon schématique en vue de détail en coupe, un protecteur selon un mode de réalisation de l'invention à l'état monté sur une connexion
- la figure 5 illustre de façon schématique en coupe un corps de protecteur selon un mode de réalisation de l'invention

Les dessins annexés pourront non seulement servir à compléter l'invention, mais aussi contribuer à sa définition, le cas échéant. Ils ne sont pas limitatifs quant à la portée de l'invention.

L'invention a pour but de permettre la protection de l'extrémité filetée d'un composant tubulaire d'un joint fileté tubulaire (destiné au forage ou à l'exploitation de puits d'hydrocarbures ou similaires) contre les endommagements mécaniques, les pollutions (chimiques et matérielles) et les détériorations (corrosion) entre le moment où il sort de sa chaîne de fabrication et celui où il est utilisé (avec plusieurs montages-démontages possibles du dispositif de protection), mais également entre deux utilisations successives, en réduisant les risques de perte de positionnement d'un joint d'étanchéité.

Elle a également pour but de permettre un montage et un démontage sur chantier rapides et fiables du protecteur sur une extrémité de composant et de permettre une inspection facile de l'état des filetages avant utilisation ou entre deux utilisations successives du composant. Elle évite la mise en œuvre de produits additionnels au montage.

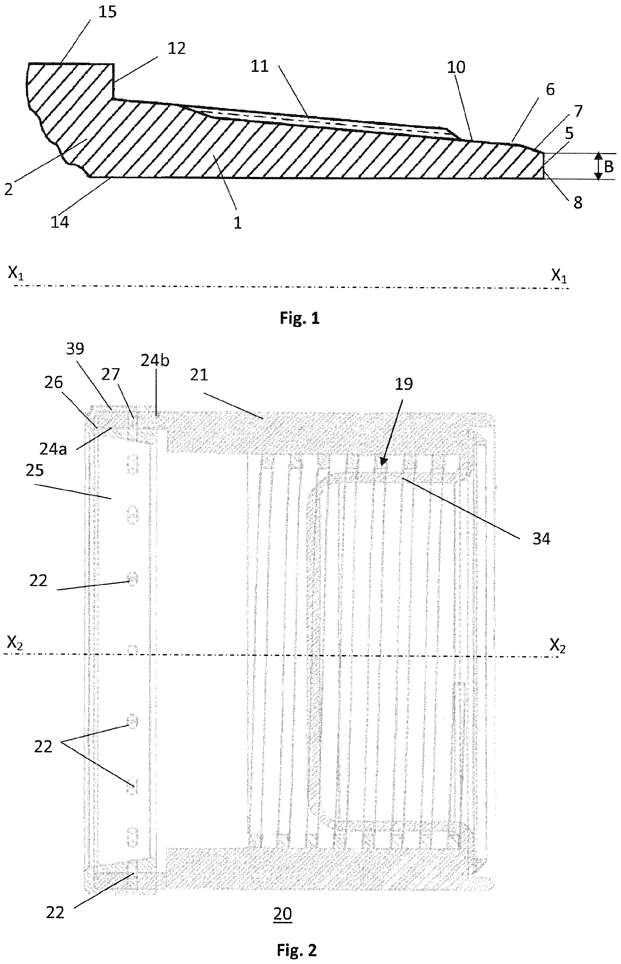

La figure 1 représente en vue de section une partie d'un composant tubulaire qui comprend un corps tubulaire (2) et au moins une connexion mâle (1). La connexion mâle est généralement réalisée par usinage sur le corps tubulaire. Le corps tubulaire comprend une paroi latérale extérieure (15) et une paroi latérale intérieure (14). La connexion mâle (1) de la figure 1 présente un axe principal X₁.

La connexion mâle (1) comprend un filetage externe (11), destiné à être vissé sur la connexion femelle d'un autre composant tubulaire par le filetage interne (non représenté) de la connexion femelle correspondante. La connexion mâle (1) comprend également sur une surface latérale externe de connexion (10), une surface annulaire extérieure (12), une surface annulaire intérieure (5), une surface d'étanchéité (6) et une paroi latérale intérieure (14).

La connexion mâle (1) du composant se termine par une surface annulaire distale (5), d'orientation sensiblement transversale. Cette surface annulaire distale peut être simple, plane, comme représentée sur la figure 1, et alternativement elle peut être non plane, par exemple conique. La surface annulaire distale peut optionnellement comprendre une surface de butée (8), qui a pour fonction d'être en appui sur une surface correspondante de la connexion femelle correspondante à l'état vissé, afin de créer une surface d'étanchéité ou de transmettre un couple.

La surface annulaire distale (5) d'une connexion mâle est une surface annulaire intérieure. La surface annulaire distale d'une connexion femelle est une surface annulaire extérieure.

Une surface d'extrémité distale est une surface annulaire située en aval du filetage d'une connexion. Un premier élément d'un composant est en aval d'un deuxième élément d'un composant quand le premier élément est axialement positionné plus près de l'extrémité libre du composant. Un premier élément d'un composant est en amont d'un deuxième élément d'un composant quand le premier élément est axialement positionné plus loin de l'extrémité libre du composant.

La surface annulaire extérieure (12) d'une connexion peut comprendre une surface extérieure de butée, une surface extérieure de portée (appelée aussi surface d'étanchéité) et/ou une surface de liaison entre la zone comprenant le filetage externe (11) et la paroi latérale extérieure (15) du corps tubulaire (2).

Un filetage (11) de connexion peut comprendre des filets parfaits et des filets évanouissants ou imparfaits. En effet, lorsqu'un filetage est conique, celui-ci peut être subdivisé en une sous-partie dite à filets parfaits, dont le profil est constant et sans irrégularité ou imperfection (par exemple du type bavure) et une sous-partie dite à filets évanouissants ou imparfaits, dont la hauteur est progressivement décroissante et dont le profil peut présenter des irrégularités ou imperfections de manière à ménager un jeu entre les sommets et les fonds de filets. Des filets imparfaits n'encaissent quasiment pas d'efforts de vissage dans la mesure où ils n'entrent pas en contact avec des surfaces des filets de la partie conjuguée.

Une connexion mâle (1) peut également comprendre une ou plusieurs surfaces d'étanchéité métal/métal en correspondance avec des surfaces d'étanchéité d'une connexion femelle (en aval du filetage, en amont du filetage ou entre deux parties filetées). Une connexion mâle (1) peut également comprendre deux filetages extérieurs.

La figure 2 est une vue de détail en coupe, d'un mode de réalisation de l'invention, dans un plan comprenant l'axe X₂. Un protecteur (20) selon l'invention comprend un corps principal (21) sensiblement de révolution, d'axe X₂, et au moins un joint annulaire (25). Le protecteur (20) comprend aussi au moins un filetage (19) apte à engrener le filetage (11) de la connexion (1).

La protection étant notamment mécanique, le corps (21) doit présenter une certaine rigidité tout en étant capable d'absorber au moins partiellement les coups. Pour ce faire, le corps (21) peut par exemple être réalisé par injection d'un matériau thermoplastique dans un moule adapté. Parmi les différentes familles de matériaux thermoplastiques qui peuvent être avantageusement utilisées, on peut notamment citer les mélanges à base de polycarbonate comme le polycarbonate-polyester (PC-PBT ou PC-PET) et les polyéthylènes (PE) à haute ou ultra haute densité (PE-HD, PE-UHD).

La spécification API 5CT édition 2011 prévoit dans son annexe I des exigences pour les dispositifs de protection de filetages, notamment des valeurs minimales de résistance aux chocs axiaux et de biais (à 45°) pour trois températures (-46, +21 et +66°C).

On peut par exemple plus particulièrement choisir un PE-HD produit par la société DOW et vendu sous le nom DMBA-8904-NT7 ou produit par la société BASELL et vendu sous le nom LUPOLEN 4261 AG UV 6005, un PE-UHD produit par la société TICONA et vendu sous le nom GUR 5113, ou un PC-PBT produit par la société BAYER et vendu sous le nom MAKROBLEND S7916.

Le corps (21) peut être éventuellement partiellement (au moins) alvéolé, notamment dans ses portions épaisses, afin de mieux absorber les coups.

Le corps (21) peut également être renforcé par un renfort, par exemple une jupe métallique, pour renforcer sa rigidité ou améliorer sa résistance aux chocs.

Dans le mode de réalisation de la figure 2, le corps (21) comprend une cloison radiale (34) formant bouchon. Dans une variante non représentée, la cloison radiale (34) est munie d'ouvertures, voire même est inexistante.

Le joint d'étanchéité (25) est destiné à être placé au contact, d'une part, d'une surface du composant tubulaire et d'autre part d'une surface du corps de protecteur.

Le joint d'étanchéité (25) est réalisé dans un matériau souple, c'est-à-dire déformable, et élastique, c'est-à-dire pouvant reprendre sensiblement sa forme initiale. Le joint d'étanchéité est réalisé dans un matériau de rigidité plus faible que le matériau du corps de protecteur soit un module d'Young plus petit que celui du matériau du corps du protecteur.

Ledit matériau peut offrir une élongation à la rupture supérieure à 300%. Pour ce faire, il peut par exemple être réalisé par injection dans un matériau souple résistant à la corrosion, aux attaques chimiques, notamment des solvants industriels et des acides, et à l'exposition prolongée aux rayonnements UV, avec conservation des propriétés mécaniques. Parmi les différentes familles de matériaux qui peuvent être avantageusement utilisées, on peut notamment citer les élastomères néoprènes tel que le Baypren 210 fabriqué par LANXESS, les EPDM tel que Nordel IP Hydrocarbon Rubber fabriqué par DOW, les nitriles, ou l'un de ces matériaux disposé dans une matrice polyoléfine. Le joint d'étanchéité (25) peut être constitué par ledit matériau.

Dans un mode de réalisation, le dispositif d'étanchéité (25) est placé au contact du composant au moins dans une partie qui est située en aval d'un filetage (19) de l'extrémité mâle (3) ou d'un filetage de l'extrémité femelle, et d'autre part, du corps (21). Le dispositif d'étanchéité (25) est plus précisément destiné à assurer une première étanchéité en aval du filetage (19).

Un joint d'étanchéité (25) comprend une couronne (26) et une extension de maintien (27) destinée à être introduite dans un orifice (22) pratiqué dans le corps principal (21) du protecteur (20).

Avantageusement, le corps (21) présente une pluralité d'orifices (22) à travers lesquels pénètrent une pluralité d'extensions de maintien (27), ce qui permet de faciliter au montage le positionnement du joint sur le protecteur et d'assurer la tenue du joint annulaire sur le protecteur pendant les manipulations et pendant les opérations de vissage/dévissage du protecteur sur l'extrémité de composant tubulaire. La tenue du joint d'étanchéité est assurée par les forces de frottement entre les parois d'un orifice (22) et la surface d'une extension de maintien (27) et/ou par un jeu de montage serré entre l'orifice et l'extension de maintien. Un tel montage permet d'obtenir une liaison étanche entre le joint et le corps du protecteur.

Un orifice est obtenu directement lors du moulage du protecteur, ou bien peut être obtenu par usinage dans le corps du protecteur, ou bien par perçage dans le corps du protecteur. Dans ce dernier cas, l'orifice présente de préférence une section circulaire pour des raisons de simplicité et de coût d'usinage. Un orifice peut présenter des sections de forme différente, par exemple triangulaire ou rectangulaire ou polygonale.

De préférence, une extension de maintien présente une section de même forme que la section de l'orifice.

Dans le mode de réalisation de la figure 2, les orifices (22) sont pratiqués sur la périphérie (23) du protecteur, pour permettre la mise en place d'un joint d'étanchéité destiné à être mis en contact avec la surface latérale intérieure d'une extrémité mâle ou la surface latérale extérieure d'une extrémité femelle.

Avantageusement, les orifices sont débouchants, ce qui permet d'améliorer la tenue du joint sur le corps de protecteur et qui permet également à l'opérateur de constater un éventuel défaut de montage du joint sur le corps de protecteur.

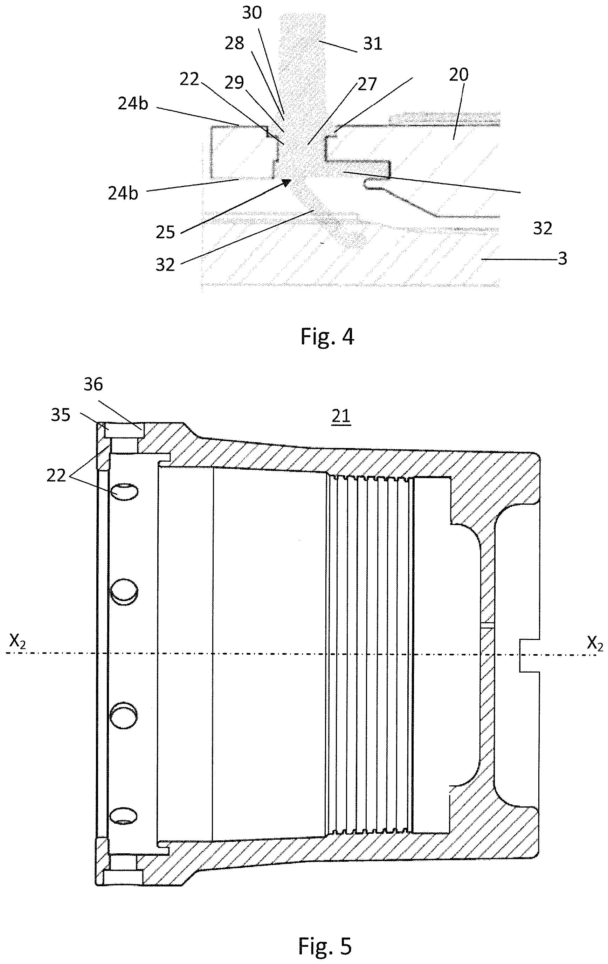

La figure 4 montre dans une vue de détail en coupe un joint d'étanchéité (25) monté sur le corps (21) de protecteur (20), et comprenant une extension de maintien (27) et comprenant également une tête de verrouillage (28) qui présente une section à l'état libre supérieure à la section d'un orifice (22), et déterminée de façon telle qu'à l'état compressé, la tête de verrouillage (28) puisse traverser un orifice (22). Lorsque le joint est à l'état monté sur le protecteur, la couronne (26) est en appui sur une première surface (24a) du corps du protecteur, une extension de maintien (27) s'étend au travers de l'orifice (22), l'orifice (22) traversant le corps du protecteur et débouchant sur la première surface du corps de protecteur d'une part, et débouchant d'autre part sur une deuxième surface (24b) du corps du protecteur.

De préférence, une tête de verrouillage (28) a une forme de portion tronconique, comprenant une base de plus grand diamètre (29) et une base de plus petit diamètre (30), la tête de verrouillage (28) étant reliée à une extension de maintien (27) par sa plus base de plus grand diamètre (29). Ceci facilite le passage de la tête de verrouillage à travers un orifice (22), une base de petit diamètre pénétrant l'orifice en premier plus facilement, et d'autre part ceci améliore la tenue du joint, la base de plus grand diamètre étant positionnée en appui sur une surface de débouchement de l'orifice, à l'état du joint monté sur le protecteur, et s'opposant au retrait de l'extension de maintien hors de l'orifice.

L'extension de maintien (27) comprend optionnellement une prise de tête (31) reliée à l'extension de maintien par la tête de verrouillage (28). La prise de tête (31) est reliée à la tête de verrouillage (28) par sa base de plus petit diamètre.

La prise de tête (31) permet à un opérateur de forcer le passage de la tête de verrouillage (28) et de l'extension de maintien (27) à travers l'orifice (22) en utilisant par exemple un outil pinçant. Ceci permet notamment d'augmenter les dimensions de la tête de verrouillage (28) relativement par rapport aux dimensions de l'orifice (22) pour améliorer la retenue du joint d'étanchéité (25). Avec cette augmentation de dimension de la tête de verrouillage, il peut devenir impossible à l'opérateur de mettre en place le joint sans outillage spécialisé tel qu'une pince, et la présence d'une prise de tête (31) évite que la tête de verrouillage puisse être détériorée par ledit outil.

Avantageusement, une prise de tête (31) peut être coupée après montage du joint d'étanchéité sur le protecteur sans préjudice à la tenue du joint d'étanchéité sur le protecteur.

Des tests effectués par la demanderesse ont montré l'impossibilité de démonter un joint selon ce dernier mode de réalisation sauf par exemple à cisailler ou percer le joint au niveau des têtes de verrouillage, soit en détériorant intentionnellement de manière irréversible le joint.

Dans une variante, un orifice (22) débouche dans un alésage (35) pratiqué sur la deuxième surface du corps de protecteur opposée à la première surface, sur laquelle prend appui la couronne (26) du joint annulaire (25). L'alésage (35) présente une section de dimensions supérieures à celle de la tête de verrouillage (28). Cet alésage permet de protéger la tête de verrouillage contre un outil rasant pouvant couper ou arracher ladite tête de verrouillage.

Dans une variante représentée en figure 5, l'alésage (35) peut être une gorge circonférentielle (36).

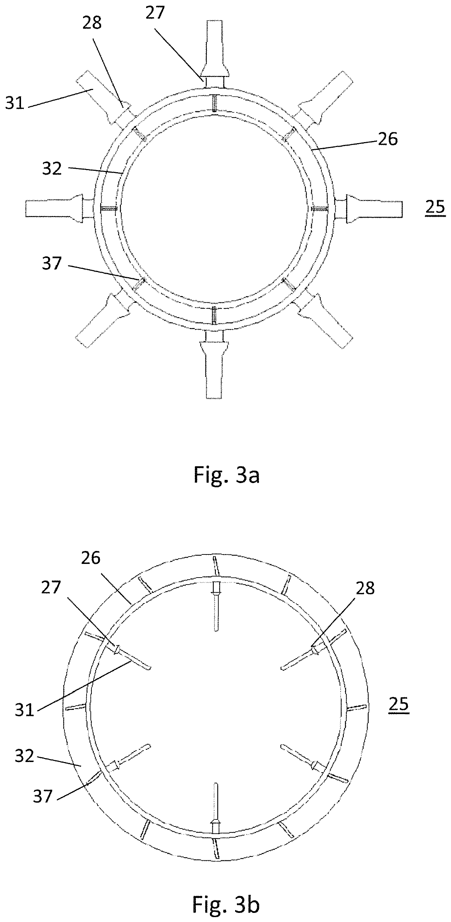

La figure 3a représente en vue de face (depuis l'amont) un joint d'étanchéité (25) selon un mode de réalisation de l'invention, destiné à être monté sur un protecteur de connexion mâle. Une lèvre d'étanchéité (32) s'étend vers l'intérieur de la couronne (26). Des extensions de maintien (27) régulièrement distribuées sur la circonférence de la couronne (26) s'étendent depuis ladite couronne vers l'extérieur. Les extensions de maintien (27) comprennent des têtes de verrouillage (28) et des prises de tête (31).

La lèvre d'étanchéité s'étend sur toute la circonférence du corps de protecteur afin de créer une étanchéité circonférentielle sur une surface d'une connexion (3). La lèvre d'étanchéité (32) peut optionnellement être raccordée à la couronne (26) par des nervures (37).

La figure 3b représente en vue de face (depuis l'amont) un joint d'étanchéité (25) selon un mode de réalisation de l'invention, destiné à être monté sur un protecteur de connexion femelle. Une lèvre d'étanchéité (32) s'étend vers l'extérieur de la couronne (26). Des extensions de maintien (27) régulièrement distribuées sur la circonférence de la couronne (26) s'étendent depuis ladite couronne vers l'intérieur. Les extensions de maintien (27) comprennent des têtes de verrouillage (28) et des prises de tête (31).

De préférence, la lèvre d'étanchéité (32) est localisée sensiblement axialement au même niveau que les orifices (22), ce qui permet de réduire la matière utilisée pour fabriquer le joint d'étanchéité et également de réduire les risques de déchirure du joint.

Dans un mode de réalisation, le joint d'étanchéité (25) est en contact avec l'extrémité mâle ou femelle du composant uniquement avec une surface latérale (10) de ladite extrémité, et n'est pas en contact avec un filetage de l'extrémité à l'état monté.

Dans un mode de réalisation non revendiqué représenté figure 2, le joint annulaire (25) est surmoulé sur le corps (21). Le joint annulaire comprend une couronne (26) liée à une première surface de corps de protecteur (24a) et une pluralité d'extensions de maintien (27). Le joint annulaire de la figure 3 comprend en outre une couronne secondaire optionnelle (39) liée à la seconde surface de corps de protecteur (24b). Les extensions de maintien (27) s'étendent depuis la couronne (26) jusqu'à la couronne secondaire optionnelle (39). La présence d'orifices permet à la matière du dispositif d'étanchéité de s'écouler à travers ceux-ci lors du surmoulage. Lors du refroidissement, la matière du dispositif d'étanchéité solidifie et assure la solidarisation du dispositif d'étanchéité sur le corps principal. La solidarisation s'effectue au niveau des surfaces de contact entre la matière surmoulée et le corps du protecteur. Dans le cas représenté, l'adhésion se fait entre la couronne (26) et la première surface de corps de protecteur (24a) et entre la couronne secondaire optionnelle (39) et la deuxième surface de corps de protecteur (24b), et l'adhésion est améliorée par les extensions de maintien qui font contact avec la surface des orifices (22).

L'adhésion est encore améliorée lorsque le joint d'étanchéité comprend une couronne secondaire optionnelle (39), les extensions de maintien s'étendant depuis la couronne (26) jusqu'à la couronne secondaire optionnelle (39), ces trois éléments étant liés par la matière en un ensemble cohérent.

Par ailleurs, dans le cadre d'un procédé de surmoulage par injection de matière, la présence d'orifices facilite l'injection en aidant au remplissage et à l'écoulement de la matière dans le moule.

Avantageusement encore, les orifices sont répartis sur une périphérie du corps principal.

De manière avantageusement complémentaire, le protecteur comprend un dispositif d'étanchéité secondaire propre à être placé au contact, d'une part, d'une surface dudit composant, au moins dans la partie terminale libre de l'extrémité du composant, et d'autre part, dudit corps principal de manière à assurer une étanchéité en amont dudit filetage.

Les caractéristiques complémentaires avantageuses liées au premier dispositif d'étanchéité peuvent également être appliquées au dispositif d'étanchéité secondaire. Ainsi, le dispositif d'étanchéité secondaire peut notamment être solidaire du corps principal, notamment par l'utilisation d'orifices dans le corps du protecteur à travers lesquels pénètre une partie du dispositif d'étanchéité et / ou surmoulé sur le corps principal.

## Revendications

1. Protecteur (20) d'extrémité mâle (1) ou femelle (3) de composant de joint fileté tubulaire pour le forage ou l'exploitation de puits d'hydrocarbures, comprenant un corps principal (21), un premier joint d'étanchéité (25) en matière moins rigide que la matière du corps du protecteur (21) et destiné à faire étanchéité avec une surface d'une extrémité du composant, le corps principal comprenant une pluralité d'orifices (22) à travers lesquels pénètre le joint d'étanchéité (25) et **caractérisé en ce que** le corps principal (21) comprend une pluralité d'alésages (35) dans lesquelles débouchent une pluralité d'orifices (22).

2. Protecteur selon la revendication 1 **caractérisé en ce que** les orifices (22) sont répartis sur une périphérie du corps principal.

3. Protecteur selon l'une des revendications précédentes **caractérisé en ce que** le moyen d'étanchéité comprend une couronne (26), une lèvre d'étanchéité (30), une extension de maintien (27).

4. Protecteur selon la revendication 3 selon laquelle une extension de maintien (27) comprend une tête de verrouillage (28).

5. Protecteur selon la revendication 3 ou 4 selon laquelle une extension de maintien (27) comprend une prise de tête (29).

6. Protecteur selon la revendication 4 ou 5 **caractérisée en ce que** le corps principal (21) comprend une gorge circonférentielle (36) dans lesquelles débouchent une pluralité d'orifices (22).

7. Protecteur selon la revendication 1 ou 2 **caractérisé en ce que** le moyen d'étanchéité est surmoulé sur le corps du protecteur et pénètre au moins un orifice.

8. Protecteur selon l'une des revendications précédentes **caractérisé en ce que** le joint d'étanchéité (25) est en élastomère.

9. Protecteur selon l'une des revendications précédentes **caractérisé en ce que** le joint d'étanchéité (25) est destiné à faire étanchéité avec une surface latérale (10) de la surface d'extrémité du composant.

10. Procédé de montage d'un protecteur selon la revendication 5 comprenant les étapes de :
- Disposer un premier joint d'étanchéité (25) sur le corps de protecteur
- Enfoncer une extension de maintien (27) au travers d'un orifice (22)
- Couper la prise de tête (29)

11. Procédé selon la revendication précédente comprenant l'étape de :
- Tirer sur une prise de tête (29) d'une extension de maintien (27) jusqu'à ce que la tête de verrouillage (28) traverse totalement l'orifice

## Patentansprüche

1. Schutzkappe (20) für ein Außengewindeende (1) oder Innengewindeende (3) einer Gewinderohrverbindungs-Komponente zum Bohren oder zum Betreiben von Kohlenwasserstoffbohrungen, welche einen Hauptkörper (21) und eine Dichtung (25) aus einem Material, das weniger starr als das Material des Körpers (21) der Schutzkappe ist, die dazu bestimmt ist, die Dichtigkeit mit einer Fläche eines Endes der Komponente zu bewirken, umfasst, wobei der Hauptkörper eine Vielzahl von Öffnungen (22) umfasst, durch welche die Dichtung (25) hindurchdringt, **dadurch gekennzeichnet, dass** der Hauptkörper (21) eine Vielzahl von Bohrungen (35) umfasst, in welche eine Vielzahl von Öffnungen (22) mündet.

2. Schutzkappe nach Anspruch 1, **dadurch gekennzeichnet, dass** die Öffnungen (22) über einen Umfang des Hauptkörpers verteilt sind.

3. Schutzkappe nach einem der vorhergehenden Ansprüche, **dadurch gekennzeichnet, dass** das Dichtmittel einen Kranz (26), eine Dichtlippe (30) und eine Haltefortsatz (27) umfasst.

4. Schutzkappe nach Anspruch 3, wobei ein Haltefortsatz (27) einen Verriegelungskopf (28) umfasst.

5. Schutzkappe nach Anspruch 3 oder 4, wobei ein Haltefortsatz (27) einen Kopfgriff (29) umfasst.

6. Schutzkappe nach Anspruch 4 oder 5, **dadurch gekennzeichnet, dass** der Hauptkörper (21) eine Umfangsrille (36) umfasst, in welche eine Vielzahl von Öffnungen (22) mündet.

7. Schutzkappe nach Anspruch 1 oder 2, **dadurch gekennzeichnet, dass** das Dichtmittel auf den Körper der Schutzkappe aufgeformt ist und in mindestens eine Öffnung eindringt.

8. Schutzkappe nach einem der vorhergehenden Ansprüche, **dadurch gekennzeichnet, dass** die Dichtung (25) aus Elastomer besteht.

9. Schutzkappe nach einem der vorhergehenden Ansprüche, **dadurch gekennzeichnet, dass** die Dichtung (25) dazu bestimmt ist, die Dichtigkeit mit einer seitlichen Fläche (10) der Endfläche der Komponente zu bewirken.

10. Verfahren zur Anbringung einer Schutzkappe nach Anspruch 5, welches die Schritte umfasst:
- Anordnen einer ersten Dichtung (25) auf dem Körper der Schutzkappe,
- Eindrücken eines Haltefortsatzes (27) durch eine Öffnung (22) hindurch,
- Abschneiden des Kopfgriffs (29).

11. Verfahren nach dem vorhergehenden Anspruch, welches den Schritt umfasst:
- Ziehen an einem Kopfgriff (29) eines Haltefortsatzes (27), bis der Verriegelungskopf (28) die Öffnung vollständig durchquert.

## Claims

1. Protector (20) for the male (1) or female (3) end of a threaded tubular connection for drilling or operating hydrocarbon wells, comprising a principal body (21), a first sealing gasket (25) formed from a material which is less rigid than the material of the protector body (21) and intended to make a seal with a surface of an end of the component, the principal body comprising a plurality of orifices (22) through which the sealing gasket (25) passes and **characterized in that** the principal body (21) comprises a plurality of bores (35) into which a plurality of orifices (22) open.

2. Protector according to Claim 1, **characterized in that** the orifices (22) are distributed over a periphery of the principal body.

3. Protector according to one of the preceding claims, **characterized in that** the sealing means comprises a ring (26), a sealing lip (30) and a retaining extension (27).

4. Protector according to Claim 3, in which a retaining extension (27) comprises a locking head (28).

5. Protector according to Claim 3 or Claim 4, in which a retaining extension (27) comprises a head stud (29).

6. Protector according to Claim 4 or Claim 5, **characterized in that** the principal body (21) comprises a circumferential groove (36) into which a plurality of orifices (22) open.

7. Protector according to Claim 1 or Claim 2, **characterized in that** the sealing means is overmoulded onto the body of the protector and penetrates into at least one orifice.

8. Protector according to one of the preceding claims, **characterized in that** the sealing gasket (25) is formed from an elastomer.

9. Protector according to one of the preceding claims, **characterized in that** the sealing gasket (25) is intended to make a seal with a lateral surface (10) of the end surface of the component.

10. Method for fitting a protector according to Claim 5, comprising the steps of:
- placing a first sealing gasket (25) on the body of the protector;
- pushing a retaining extension (27) through an orifice (22) ;
- cutting off the head stud (29).

11. Method according to the preceding claim, comprising the step of:
- pulling on a head stud (29) of a retaining extension (27) until the locking head (28) passes completely through the orifice.
